# EUROPÄISCHE PATENTANMELDUNG

(11) **EP 2 824 117 A1**
(43) Veröffentlichungstag der Anmeldung: **14.01.2015**
(21) Anmeldenummer: 13175672.8
(22) Anmeldetag: 09.07.2013
(51) Int. Cl.: C08F 4/40, C04B 40/06

(54) **Reaktionsharz-Zusammensetzung und deren Verwendung**

(71) Anmelder: HILTI Aktiengesellschaft, 9494 Schaan (LI)
(72) Erfinder: Pfeil, Armin, 86916 Kaufering (DE)
(74) Vertreter: Hilti Aktiengesellschaft Corporate Intellectual Property

(57) **Zusammenfassung**

Es wird eine Reaktionsharz-Zusammensetzung mit einem Harzbestandteil, der eine radikalisch polymerisierbare Verbindung enthält, und einem Initiatorsystem, das ein Kupfer(II)salz und wenigstens einen Stickstoff-enthaltenden Liganden umfasst, wobei ... und wobei das Kupfer(II)salz und das Reduktionsmittel reaktionsinhibierend getrennt voneinander sind, und deren Verwendung für bauliche Zwecke beschrieben.

## Beschreibung

Die vorliegende Erfindung betrifft eine radikalisch härtbare Reaktionsharz-Zusammensetzung mit einem Harzbestandteil und einem Initiatorsystem, das einen Initiator und ein Katalysatorsystem, welches in der Lage ist, *in-situ* einen Übergangsmetallkomplex als Katalysator zu bilden, umfasst.

Die Verwendung von Reaktionsharz-Zusammensetzungen auf der Basis von ungesättigten Polyesterharzen, Vinylesterharzen oder von Epoxidharzen als Klebe- und Haftmittel, ist seit langem bekannt. Es handelt sich dabei um Zweikomponentensysteme, wobei eine Komponente die Harzmischung und die andere Komponente das Härtungsmittel enthält. Andere, übliche Bestandteile wie Füllmittel, Beschleuniger, Stabilisatoren, Lösungsmittel einschließlich Reaktivlösungsmittel (Reaktivverdünner) können in der einen und/oder der anderen Komponente enthalten sein. Durch Vermischen der beiden Komponenten wird dann die Reaktion unter Bildung eines gehärteten Produktes in Gang gebracht.

Die Mörtelmassen, welche in der chemischen Befestigungstechnik Verwendung finden sollen, sind komplexe Systeme, an die besondere Anforderungen gestellt werden, wie beispielsweise die Viskosität der Mörtelmasse, die Aushärtung und Durchhärtung in einem relativ breiten Temperaturbereich, gewöhnlich -10°C bis +40°C, die Eigenfestigkeit der ausgehärteten Masse, Haftung auf unterschiedlichen Untergründen und Umgebungsbedingungen, Lastwerte, Kriechfestigkeit und dergleichen.

Grundsätzlich kommen in der chemischen Befestigungstechnik zwei Systeme zum Einsatz. Eines auf Basis radikalisch polymerisierbarer, ethylenisch ungesättigter Verbindungen, die in der Regel mit Peroxiden gehärtet werden, und eines auf Epoxid-Amin-Basis.

Organische, härtbare zweikomponentige Reaktionsharz-Zusammensetzungen auf der Grundlage von härtbaren Epoxidharzen und Aminhärtern werden als Klebstoffe, Spachtelmassen zur Rissverfüllung und unter anderem zur Befestigung von Konstruktionselementen, wie Ankerstangen, Betoneisen (Bewehrungseisen), Schrauben und dergleichen, in Bohrlöchern verwendet. Derartige Mörtelmassen sind beispielsweise aus der EP 1 475 412 A2, der DE 198 32 669 A1 und der DE 10 2004 008 464 A1 bekannt.

Ein Nachteil der bekannten Mörtelmassen auf Epoxidbasis liegt im Einsatz von oft erheblichen Mengen an ätzenden Aminen als Härter, wie Xylylendiamin (XDA), insbesondere das m-Xylylendiamin (mXDA; 1,3-Benzoldimethanamin), und/oder an aromatischen Alkoholverbindungen, wie freie Phenole, z.B. Bisphenol A, was ein Gesundheitsrisiko für den Anwender bedeuten kann. Diese Verbindungen sind in zum Teil recht erheblichen Mengen, d.h. bis zu 50% in den jeweiligen Komponenten von Mehrkomponenten-Mörtelmassen enthalten, so dass vielfach eine Kennzeichnungspflicht der Verpackung besteht, die zu einer geringeren Anwenderakzeptanz des Produkts führt. In den letzten Jahren wurden in einigen Ländern Grenzwerte eingeführt, bis zu welchem Gehalt beispielsweise mXDA oder Bisphenol A in den Produkten enthalten sein dürfen, wobei diese dann gekennzeichnet werden müssen.

Radikalisch härtbare Systeme, insbesondere bei Raumtemperatur härtbare Systeme benötigen sogenannte Radikalstarter, auch Initiatoren genannt, damit die radikalische Polymerisation ausgelöst werden kann. Im Bereich der chemischen Befestigungstechnik haben sich aufgrund ihrer Eigenschaften die in der Veröffentlichung DE 3226602 A1 beschriebene Härterzusammensetzung, umfassend Benzoylperoxid als Radikalstarter und eine aminischen Verbindung als Beschleuniger, und die in der Veröffentlichung EP 1586569 A1 beschriebene Härterzusammensetzung, umfassend einen Perester als Härter und eine Metallverbindung als Beschleuniger, durchgesetzt. Diese Härterzusammensetzungen erlauben auch bei sehr tiefen Temperaturen bis -30°C eine schnelle und recht vollständige Aushärtung. Darüber hinaus sind diese Systeme hinsichtlich der Mischungsverhältnisse von Harz und Härter robust. Somit sind sie für die Verwendung unter Baustellenbedingungen geeignet.

Nachteilig an diesen Härterzusammensetzungen jedoch ist, dass in beiden Fällen Peroxide als Radikalstarter verwendet werden müssen. Diese sind thermisch sensibel und reagieren sehr empfindlich auf Verunreinigungen. Dies führt zu erheblichen Einschränkungen bei der Formulierung von pastösen Härterkomponenten vor allem für Injektionsmörtel hinsichtlich Lagertemperaturen, Lagerstabilitäten und der Auswahl geeigneter Komponenten. Um den Einsatz von Peroxiden, wie Dibenzoylperoxid, Perestern und dergleichen, zu ermöglichen, werden zu deren Stabilisierung Phlegmatisierungsmittel, wie Phthalate oder Wasser, zugegeben. Diese wirken als Weichmacher und beeinträchtigen damit signifikant die mechanische Stärke der Harzmischungen.

Ferner sind diese bekannten Härterzusammensetzungen insofern nachteilig, als sie erhebliche Peroxidmengen enthalten müssen, was problematisch ist, weil peroxidhaltige Produkte ab einer Konzentration von 1 %, etwa für Dibenzoylperoxid, in einigen Ländern als sensibilisierend gekennzeichnet werden müssen. Ähnliches gilt auch für die aminischen Beschleuniger, die zum Teil ebenfalls kennzeichnungspflichtig sind.

Bisher sind nur wenige Versuche unternommen worden, peroxidfreie Systeme auf Basis radikalisch polymerisierbarer Verbindungen zu entwickeln. Aus der DE 10 2011 078 785 A1 ist eine peroxidfreie Härterzusammensetzung für radikalisch polymerisierbare Verbindungen bekannt, die eine 1,3-Dicarbonylverbindung als Härter und eine Manganverbindung als Beschleuniger enthält sowie deren Verwendung für Reaktionsharz-Zusammensetzungen auf Basis radikalisch härtbarer Verbindungen. Dieses System neigt jedoch dazu, unter bestimmten Bedingungen nicht ausreichend durchzuhärten, was zu einer verminderten Leistungsfähigkeit der ausgehärteten Masse insbesondere für die Anwendung als Dübelmasse führen kann, so dass hier zwar eine Anwendung für Dübelmassen im Allgemeinen möglich ist, jedoch nicht für solche Anwendungen, bei denen zuverlässig recht hohe Lastwerte erforderlich sind.

Bei den beiden beschriebenen Systemen ist ferner nachteilig, dass jeweils ein definiertes Verhältnis von Harzkomponente und Härterkomponente (im Folgenden auch kurz als Mischungsverhältnis bezeichnet) eingehalten werden muss, damit die Bindemittel vollständig aushärten und die geforderten Eigenschaften der ausgehärteten Massen erreichen können. Viele der bekannten Systeme sind wenig robust, was das Mischungsverhältnis anbelangt und reagieren teilweise recht empfindlich auf Mischungsschwankungen, was sich in den Eigenschaften der ausgehärteten Massen niederschlägt.

Eine andere Möglichkeit, eine radikalische Polymerisation ohne den Einsatz von Peroxiden zu initiieren, liefert das in der makromolekularen Synthesechemie häufig eingesetzte ATRP-Verfahren (= Atom Transfer Radical Polymerisation). Es wird angenommen, dass es sich hierbei um eine "lebende" radikalische Polymerisation handelt, ohne dass durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenisch ungesättigte Gruppen addiert. Die Übertragung der Atomgruppe auf die Übergangsmetallverbindung ist jedoch reversibel, so dass die Atomgruppe auf die wachsende Polymerkette rückübertragen wird, wodurch ein kontrolliertes Polymerisationssystem gebildet wird. Diese Reaktionsführung wird beispielsweise von J-S. Wang, et al., J. Am. Chem. Soc., vol. 117, p. 5614-5615 (1995), von Matyjaszewski, Macromolecules, vol. 28, p. 7901-7910 (1995) beschrieben. Darüber hinaus offenbaren die Veröffentlichungen WO 96/30421 A1, WO 97/47661 A1, WO 97/18247 A1, WO 98/40415 A1 und WO 99/10387 A1 Varianten der zuvor erläuterten ATRP.

Die ATRP war lange von wissenschaftlichem Interesse und wird im Wesentlichen dazu eingesetzt, die Eigenschaften von Polymeren gezielt zu steuern und an die gewünschten Anwendungen anzupassen. Hierzu zählen die Kontrolle der Teilchengröße, der Struktur, der Länge, des Gewichts und der Gewichtsverteilung von Polymeren. Dementsprechend kann der Aufbau des Polymers, das Molekulargewicht und die Molekulargewichtsverteilung gesteuert werden. Die ATRP erlangt dadurch zunehmend auch wirtschaftliches Interesse. So beschreiben die U.S. Patente Nr. 5,807,937 und 5,763,548 (Co)polymere, die mittels ATRP hergestellt wurden und die für eine Vielzahl an Anwendungen nützlich sind, wie Dispergiermittel und grenzflächenaktive Substanzen.

Bisher wurde das ATRP-Verfahren allerdings nicht dazu eingesetzt, eine Polymerisation vor Ort, etwa auf der Baustelle unter den dort herrschenden Bedingungen durchzuführen, wie es für bauliche Anwendung, z.B. Mörtel-, Klebe- und Dübelmassen erforderlich ist. Die Anforderungen, welche bei diesen Anwendungen an die polymerisierbaren Zusammensetzungen gestellt werden, nämlich Initiierung der Polymerisation im Temperaturbereich zwischen -10°C und +60°C, anorganisch gefüllte Zusammensetzungen, Einstellung einer Gelzeit mit anschließender schneller und möglichst vollständiger Polymerisation des Harzbestandteils, die Konfektionierung als Ein- oder Mehrkomponentensysteme und die sonstigen bekannten Anforderungen an die ausgehärtete Masse, werden bisher in der umfangreichen Literatur zur ATRP nicht berücksichtigt.

Nachteilig an einem Initiatorsystem analog der ATRP ist, dass dieses System relativ komplex ist, da zur Bildung der eigentlich reaktiven Spezies mehrere Verbindungen erforderlich sind, die miteinander reagieren und gegebenenfalls durch andere in der Zusammensetzung, bei der das Initiatorsystem eingesetzt werden soll, negativ beeinflusst werden. Dies macht die Formulierung eines Systems, insbesondere eines lagerstabilen Systems sehr schwierig.

Der Erfindung liegt daher die Aufgabe zugrunde, eine Reaktionsharz-Zusammensetzung für Mörtelsysteme der eingangs beschriebenen Art bereitzustellen, welches die genannten Nachteile der bekannten Systeme nicht aufweist, welche als Zweikomponentensystem konfektioniert werden kann, welches insbesondere lagerstabil und kalthärtend ist.

Der Erfinder hat überraschend herausgefunden, dass die Aufgabe gelöst werden kann, indem für die oben beschriebenen Reaktionsharz-Zusammensetzungen auf Basis radikalisch polymerisierbarer Verbindungen vereinfachte ATRP-ähnliche Initiatorsysteme als Radikalinitiator und eingesetzt werden.

Zum besseren Verständnis der Erfindung werden zunächst die folgenden Erläuterungen der hierin verwendeten Terminologie als sinnvoll erachtet. Im Sinne der Erfindung bedeutet:
- *"kalthärtend",* dass die Polymerisation, hierin auch gleichbedeutend als *"Härtung"* bezeichnet, der beiden härtbaren Verbindungen bei Raumtemperatur ohne zusätzlichen Energieeintrag, etwa durch Wärmezufuhr, durch die in den Reaktionsharz-Zusammensetzungen enthaltenen Härtungsmitteln, gegebenenfalls in Anwesenheit von Beschleunigern, gestartet werden kann und auch eine für die geplanten Anwendungszwecke ausreichende Durchhärtung zeigen;
- *"reaktionsinhibierend getrennt",* dass eine Trennung zwischen Verbindungen bzw. Komponenten derart erreicht wird, dass eine Reaktion untereinander erst erfolgen kann, wenn die Verbindungen bzw. Komponenten etwa durch Mischen miteinander in Kontakt gebracht werden; eine reaktionsinhibierende Trennung ist auch durch eine (Mikro)verkapselung einer oder mehrerer Verbindungen bzw. Komponenten denkbar;
- *"*α*-H-Atom"* im Zusammenhang mit dem Stickstoff-enthaltenden Liganden in α-Stellung zum Stickstoffatom, d.h. ein Wasserstoffatom, das an das Kohlenstoffatom gebunden ist, welches wiederum direkt an das Stickstoffatom gebunden ist;
- *"Härtungsmittel"* Stoffe, welche die Polymerisation (das Härten) des Grundharzes bewirken;
- *"aliphatische Verbindung"* eine acyclische und cyclische, gesättigte oder ungesättigte Kohlenwasserstoffverbindung, die nicht aromatisch ist (PAC, 1995, 67, 1307; Glossary of class names of organic compounds and reactivity intermediates based on structure (IUPAC Recommendations 1995));
- *"Polymerisationsinhibitor",* hierin gleichbedeutend auch als *"Inhibitor"* bezeichnet, eine zur Inhibierung der Polymerisationsreaktion (Härtung) fähige Verbindung, die dazu dient, die Polymerisationsreaktion und damit ein unerwünschtes vorzeitiges Polymerisieren der radikalisch polymerisierbaren Verbindung während der Lagerung zu vermeiden (oftmals als Stabilisator bezeichnet) und die dazu dient, den Start der Polymerisationsreaktion unmittelbar nach der Zugabe des Härtungsmittels zu verzögern; um den Zweck der Lagerstabilität zu erreichen, wird der Inhibitor üblicherweise in so geringen Mengen eingesetzt, dass die Gelzeit nicht beeinflusst wird; um den Zeitpunkt des Starts der Polymerisationsreaktion zu beeinflussen, wird der Inhibitor üblicherweise in solchen Mengen eingesetzt, dass die Gelzeit beeinflusst wird;
- *"Reaktivverdünner"* flüssige oder niedrigviskose Monomere und Grundharze, welche andere Grundharze oder den Harzbestandteil verdünnen und dadurch die zu deren Applikation notwendige Viskosität verleihen, zur Reaktion mit dem Grundharz befähigte funktionelle Gruppen enthalten und bei der Polymerisation (Härtung) zum überwiegenden Teil Bestandteil des gehärteten Masse (Mörtel) werden.
- *"Gelzeit"* für ungesättigte Polyester- oder Vinyl-Harze, die gewöhnlich mit Peroxiden gehärtet werden, entspricht die Zeit der Härtungsphase des Harzes der Gelzeit, in der sich die Temperatur des Harzes von +25°C auf +35°C erhöht; dies entspricht in etwa dem Zeitraum, in dem sich die Fluidität oder Viskosität des Harzes noch in so einem Bereich befindet, dass das Reaktionsharz bzw. die Reaktionsharzmasse noch einfach ver- bzw. bearbeitet werden kann;
- *"Zweikomponentensystem"* ein System, das zwei voneinander getrennt gelagerte Komponenten, im Allgemeinen eine Harz- und eine Härterkomponente, umfasst, so dass eine Härtung der Harzkomponente erst nach dem Mischen der beiden Komponenten erfolgt;
- *"Mehrkomponentensystem"* ein System, das drei oder mehrere voneinander getrennt gelagerte Komponenten umfasst, so dass eine Härtung der Harzkomponente erst nach dem Mischen aller Komponenten erfolgt;
- *"(Meth)acryl*.../...*(meth)acryl...",* dass sowohl die "Methacryl.../...methacryl..."- als auch die "Acryl.../...acryl..."-Verbindungen umfasst sein sollen.

Der Erfinder hat herausgefunden, dass sich radikalisch polymerisierbare Verbindungen mit einer Kombination aus bestimmten Verbindungen, wie sie teilweise für die Initiierung der ATRP Verwendung finden, polymerisieren lassen.

Überraschender Weise wurde gefunden, dass Methacrylate in Gegenwart von Kupfer(II)salzen und Aminliganden mit α-H-Atomen bei Rautemperatur spontan radikalisch polymerisieren und dass sich diese Polymerisation durch Radikalfänger inhibieren lässt.

Es ist dem Erfinder gelungen, ohne die für die ATRP notwendige Anwesenheit eines Initiators und ohne den Einsatz von Kupfer(I)salzen, bzw. Reduktionmitteln, um *in-situ* aus Kupfer(II)salzen Kupfer(I)salze zu erzeugen, bei Raumtemperatur eine radikalische Polymerisation auszulösen.

Ein erster Gegenstand der Erfindung ist eine Reaktionsharz-Zusammensetzung mit einem Harzbestandteil, der eine radikalisch polymerisierbare Verbindung enthält, und einem Initiatorsystem, das ein Kupfer(II)salz und einen Stickstoff-enthaltenden Liganden umfasst, wobei das Kupfer(II)salz und der Stickstoff-enthaltende Ligand reaktionsinhibierend getrennt voneinander sind, die dadurch gekennzeichnet ist, dass das oxidierende Kupfer(II)kation ein Redoxpotential aufweist, das größer als das des Stickstoff-enthaltenden Liganden ist, um aus dem Stickstoff-enthaltenden Liganden ein Radikal zu erzeugen.

Damit ist es möglich, eine Reaktionsharz-Zusammensetzung bereitzustellen, die kalthärtend ist und die insbesondere als Zwei- oder Mehrkomponentensystem konfektioniert, lagerstabil ist.

Ferner können damit Reaktionsharz-Zusammensetzungen bereitgestellt werden, die frei von Peroxiden und kritischen Aminverbindungen sind und somit nicht mehr kennzeichnungspflichtig sind. Des Weiteren enthalten die Zusammensetzungen keine in der ausgehärteten Masse als Weichmacher fungierenden Phlegmatisierungsmittel mehr.

Ein weiterer Vorteil der Erfindung liegt darin, dass die Zusammensetzung, wenn sie als Zweikomponenten-System konfektioniert wird, ein beliebiges Verhältnis der beiden Komponenten zueinander zulässt, wobei das Initiatorsystem homogen gelöst in den Komponenten vorliegt, so dass auch nur eine niedrige Konzentration davon erforderlich ist. Die Zusammensetzung hat ferner den Vorteil, dass das Initiatorsystem weniger Bestandteile als die üblicherweise für die ATRP erforderlichen Bestandteile des Initiatorsystems aufweist und daher einfacher und insbesondere weniger anfällig für Störungen ist.

Das Initiatorsystem umfasst erfindungsgemäß ein Kupfer(II)salz und einen Stickstoff-enthaltenden Liganden (hierin auch als Aminligand bezeichnet). Diese werden so ausgewählt, dass unter den vorliegenden Reaktionsbedingungen, d.h. basisches Milieu durch die Stickstoff-enthaltenden Liganden und die gegebenenfalls in der Zusammensetzung enthaltenen mineralischen Zuschlagstoffe, die häufig ebenfalls zu einem alkalischen Milieu führen, und Reaktion bei Umgebungstemperatur, eine Redoxreaktion zwischen dem Kupfer(II)salz und dem Stickstoff des Stickstoff-enthaltenden Liganden stattfindet, infolge dessen Radikalkationen, genauer *N*-Radikalkationen gebildet werden.

Es wird angenommen, dass unter den vorherrschenden Reaktionsbedingungen ein Stickstoffradikalkation gebildet wird, wenn das Redoxpotential des Kupfer(II)kations größer ist, als das des Stickstoffatoms in dem Stickstoff-enthaltenden Liganden. In dem vorherrschenden alkalischen Milieu wird dann vermutlich ein Proton am in α-Stellung zum Stickstoffradikalkation stehenden Kohlenstoffatom abgespalten, und die entstehenden Spezies zum initiierenden Radikal, genauer *N*-Alkylradikal umgewandelt.

Zweckmäßig muss das Kupfer(II)kation des Kupfer(II)salzes an einem Ein-Elektronen-Redoxprozess teilnehmen können und es sollte in der Lage sein, reversibel seine Koordinationszahl um eins zu erhöhen. Ferner muss es in der Lage sein, das Stickstoffatom des Aminliganden zu einem Stickstoffradikalkation zu oxidieren. Sein Redoxpotential muss also größer als das des Stickstoffatoms des Aminliganden sein. Dies hängt unter zum einen auch davon ab, ob ein Lösungsmittel für das Kupfer(II)salz verwendet wird und zum anderen von der Natur des Lösungsmittels, d.h. welchen Einfluss das Lösungsmittel auf die Redoxpotentiale des Kupfer(II)kations und des Stickstoffatoms hat, sofern eines verwendet wird. Des Weiteren hat die Löslichkeit des Kupfer(II)salzes in dem Reaktionsharz und/oder den Reaktivverdünnern, sofern diese enthalten sind, einen Einfluss auf das Redoxpotential des Kupfer(II)kations.

Es wird vermutet, dass in Gegenwart des Stickstoff-enthaltenden Liganden, welcher ein basisches Amin ist, ein Proton in α-Stellung von dem N-Alkylrest abgespalten wird, so dass sich daraus radikalische Folgeprodukte bilden, wie etwa ein N-Alkylradikal. Diese radikalischen Folgeprodukte können dann die Polymerisation auslösen und wirken daher als eigentlicher Initiator.

Der Ligand trägt zweckmäßig zur Löslichkeit des Kupfersalzes in der zu verwendenden radikalisch polymerisierbaren Verbindung bei, sofern das Kupfersalz selbst noch nicht ausreichend löslich ist und vermag das Redoxpotential des Kupfers in Bezug auf Reaktivität und Halogentransfer einzustellen.

Geeignete Kupfer(II)salze sind solche, die in der verwendeten radikalisch polymerisierbaren Verbindung oder einem gegebenenfalls der Harzmischung zugegebenen Lösungsmittel, wie etwa ein Reaktivverdünner, löslich sind. Derartige Kupfer(II)salze sind beispielsweise Cu(II)(PF₆)₂, CuX₂, mit X= Cl, Br, I, wobei CuX₂ bevorzugt und CuCl₂ oder CuBr₂ mehr bevorzugt ist, Cu(OTf)₂ (-OTf = Trifluormethansulfonat, CF₃SO₃⁻) oder Cu(II)-Carboxylate. Besonders bevorzugt sind solche Kupfer(II)salze, welche abhängig von der verwendeten radikalisch polymerisierbaren Verbindung schon ohne Ligandenzusatz in dieser löslich sind.

Geeignete Stickstoff-enthaltende Liganden sind Amine, die sich durch Kupfer(II) bei Raumtemperatur oxidieren lassen und leicht abstrahierbare Wasserstoffatome am zum Stickstoff stehenden α-Kohlenstoffatom besitzen, und tertiäre Aminogruppen aufweisen, wie tertiäre aliphatische Amine mit Wasserstoffatomen am zum Stickstoffatom stehenden α-Kohlenstoffatom.

Bevorzugt ist ein Stickstoff-enthaltender Ligand, der zwei oder mehr Stickstoffatome enthält.

Bei Verwendung eines zusätzlichen Lösungsmittels und bei geeigneter Wahl des Kupfer(II)salzes können auch heterocyclische Amine, wie beispielsweise 2,2'-Bipyridin oder 1,10-Phenanthrolin, entsprechend oxidiert werden.

Beispiele geeigneter Stickstoff-enthaltende Liganden mit Wasserstoffatomen am zum Stickstoffatom stehenden α-Kohlenstoffatom sind z.B. Ethylendiaminotetraacetat (EDTA), N,N-Dimethyl-N',N'-bis(2-dimethylaminoethyl)ethylendiamin (Me6TREN), oder N,N,N',N",N"-Pentamethyldiethylentriamin (PMDETA) sowie dessen höhere und niedrigere Homologe.

Entgegen den Empfehlungen aus der wissenschaftlichen Literatur, die für die einzusetzende Menge an Stickstoff-enthaltenden Liganden in der Regel ein Verhältnis von Cu : Ligand = 1 : 2 als optimal beschreibt, hat der Erfinder überraschend herausgefunden, dass die Reaktionsharz-Zusammensetzung eine deutlich stärkere Reaktivität zeigt, d.h. schneller aushärtet und besser durchhärtet, wenn der Stickstoff-enthaltende Ligand im Überschuss eingesetzt wird. Hierbei bedeutet *"im Überschuss",* dass der Aminligand durchaus im Verhältnis Cu : Ligand = 1 : 5, oder gar bis 1 : 10 eingesetzt wird. Maßgeblich ist, dass dieser Überschuss sich wiederum nicht schädlich auf die Reaktion und die Endeigenschaften auswirken.

Ebenfalls entgegen den Empfehlungen aus der wissenschaftlichen Literatur, hat der Erfinder überraschend herausgefunden, dass die Reaktionsharz-Zusammensetzung unabhängig von der eingesetzten Menge eine deutlich stärkere Reaktivität zeigt, wenn der Ligand eine Stickstoff-enthaltende Verbindung mit primären Aminogruppen ist.

Der Stickstoff-enthaltende Ligand kann entweder alleine oder als Gemisch aus zweien oder mehreren davon eingesetzt werden.

Durch die Zugabe einer starken, nicht-nucleophilen Base lässt sich die Härtungsreaktion beschleunigen. Geeignete Basen sind dem Fachmann aus dem Bereich der organischen Synthese bekannt. Beispielhaft können N,N-Diisopropylethylamin (DiPEA), 1,8-Diazabicycloundec-7-en (DBU), 2,6-Di-*tert*-butylpyridin, Phosphazenbasen, Lithiumdiisopropylamid (LDA), Silizium-basierte Amide, wie Natrium- und Kaliumhexamethyldisilazan (NaHMDS und KHMDS), Lithium-2,2,6,6-tetramethylpiperidin (LiTMP), Natrium- und Kalium-*tert*-butoxid erwähnt werden.

Als radikalisch polymerisierbare Verbindungen sind erfindungsgemäß ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Veröffentlichungen EP 1 935 860 A1, DE 195 31 649 A1, WO 02/051903 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättiger Polyester, die in der erfindungsgemäßen Harzmischung verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, erhalten werden. Beispiele solcher Verbindungen sind aus den Veröffentlichungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglykolmono(meth)acrylat geeignet. Bevorzugt sind Acryl- bzw. Methacrylsäurehydroxylalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglykol, Propandiol, Dipropylenglykol, andere Diole, wie 1,4-Butandiol, 1,6-Hexandiol, Neopentylglykol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/ oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

In einer bevorzugten Ausführungsform der Erfindung enthält die Reaktionsharz-Zusammensetzung weitere niederviskose, radikalisch polymerisierbare Verbindungen als Reaktivverdünner für die radikalisch polymerisierbare Verbindung, um deren Viskosität falls erforderlich, anzupassen.

Geeignete Reaktivverdünner sind in den Veröffentlichungen EP 1 935 860 A1 und DE 195 31 649 A1 beschrieben. Vorzugsweise enthält die Harzmischung als Reaktivverdünner einen (Meth)acrylsäureester, wobei besonders bevorzugt (Meth)acrylsäureester aus der Gruppe ausgewählt werden, bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Butandiol-1,4-di(meth)acrylat, Acetoacetoxyethyl(meth)acrylat, Ethandiol-1,2-di(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.10.^{2.6}-decan, 3-(Meth)cyclopentadienyl(meth)acrylat, Isobornyl(meth)acrylat und Decalyl-2-(meth)acrylat.

Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie tert-Butylstyrol, Divinylbenzol und Allylverbindungen.

In einer weiteren Ausführungsform der Erfindung enthält die Reaktionsharz-Zusammensetzung ferner einen Inhibitor.

Als Inhibitor sowohl für die Lagerstabilität der radikalisch polymerisierbaren Verbindung und damit auch des Harzbestandteils als auch zur Einstellung der Gelzeit sind die für radikalisch polymerisierbare Verbindungen üblicherweise als Inhibitoren verwendeten stabilen Radikale, wie *N*-Oxyl-Radikale geeignet, wie sie dem Fachmann bekannt sind. Phenolische Inhibitoren, wie sie sonst üblicherweise in radikalisch härtbaren Harzzusammensetzungen Verwendung finden, können hier nicht verwendet werden, da die Inhibitoren als Reduktionsmittel mit dem Kupfer(II)salz reagieren würden, was sich nachteilig auf die Lagerstabilität und die Gelzeit auswirken würde.

Als *N*-Oxyl-Radikale können beispielsweise solche verwendet werden, wie sie in der DE 199 56 509 A1 beschrieben sind. Geeignete stabile *N*-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, oder Indolin-Nitroxidradikale, wie 2,3-Dihydro-2,2-diphenyl-3-(phenylimino)-1H-indol-1-oxylnitroxid, oder β-phosphorylierte Nitroxidradikale, wie 1-(Diethoxyphosphinyl)-2,2-dimethylpropyl-1,1-dimethylmethyl-nitroxid, und dergleichen.

Die Reaktionsharz-Zusammensetzung kann ferner anorganische Zuschlagstoffe enthalten, wie Füllstoffe und/oder weitere Zusätze.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl, oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Denkbare Additive sind Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, Wasser oder Glykole. Ferner können Metallfänger in Form von oberflächenmodifizierten pyrogenen Kieselsäuren in der Reaktionsharz-Zusammensetzung enthalten sein.

In dieser Hinsicht wird Bezug genommen auf die Veröffentlichungen WO 02/079341 A1 und WO 02/079293 A1 sowie WO 2011/128061 A1, deren Inhalt hiermit in diese Anmeldung aufgenommen wird.

Dementsprechend ist ein weiterer Gegenstrand der Erfindung ein Zwei- oder Mehrkomponenten-System, welches die beschriebene Reaktionsharz-Zusammensetzung enthält.

In einer Ausführungsform der Erfindung werden die Bestandteile der Reaktionsharz-Zusammensetzung räumlich so angeordnet, dass das Kupfer(II)salz und der mindestens eine Stickstoff-enthaltende Ligand getrennt voneinander vorliegen, d.h. in jeweils einer getrennt voneinander angeordneten Komponente. Damit wird verhindert, dass die Bildung der reaktiven Spezies, nämlich des reaktiven Alkylradikals und damit die Polymerisation der radikalisch polymerisierbaren Verbindung bereits bei der Lagerung einsetzt.

Eine bevorzugte Ausführungsform betrifft ein Zweikomponenten-System, welches eine Reaktionsharz-Zusammensetzung enthält, die eine radikalisch polymerisierbare Verbindung, ein Kupfer(II)salz, einen Stickstoff-enthaltenden Liganden, einen Inhibitor, gegebenenfalls mindestens einen Reaktivverdünner und gegebenenfalls anorganische Zuschlagstoffe umfasst. Dabei sind in einer ersten Komponente, der A-Komponente, das Kupfer(II)salz und in einer zweiten Komponente, der B-Komponente, und der Stickstoff-enthaltende Ligand enthalten, wobei die beiden Komponenten getrennt voneinander gelagert sind, um eine Reaktion der Bestandteile untereinander vor deren Vermischen zu verhindern. Die radikalisch polymerisierbare Verbindung, der Inhibitor, der Reaktivverdünner sowie die anorganischen Zuschlagstoffe sind auf die A- und B-Komponente verteilt.

Die Reaktionsharz-Zusammensetzung kann in einer Patrone, einem Gebinde, einer Kapsel oder einem Folienbeutel, welcher zwei oder mehrere Kammern umfasst, die voneinander getrennt sind und in denen das Kupfer(II)salz und der Stickstoff-enthaltende Ligand reaktionsinhibierend getrennt voneinander enthalten sind, enthalten sein.

Die erfindungsgemäße Reaktionsharz-Zusammensetzung findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und dergleichen, in Bohrlöchern Verwendung, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein und dergleichen.

Die Verwendung der oben definierten Reaktionsharzmörtel-Zusammensetzung für Bauzwecke, umfasst das Aushärten der Zusammensetzung durch Mischen des Kupfer(II)salzes mit dem Reduktionsmittel oder des Kupfer(II)salzes mit dem Reduktionsmittel und dem Liganden.

Zum Befestigen von Gewindeankerstangen, Bewehrungseisen, Gewindehülsen und Schrauben in Bohrlöchern in verschiedenen Untergründen wird das Kupfer(II)salz mit dem Liganden und gegebenenfalls der Base zusammen mit dem Reaktionsharz und gegebenenfalls weiteren Bestandteilen wie oben erwähnt gemischt, die Mischung in das Bohrloch eingebracht, die Gewindeankerstange, das Bewehrungseisen, die Gewindehülse oder die Schraube in die Mischung in dem Bohrloch eingeführt und die Mischung ausgehärtet.

Die Erfindung wird anhand einer Reihe von Beispielen und Vergleichsbeispielen näher erläutert. Alle Beispiele stützen den Umfang der Ansprüche. Die Erfindung ist jedoch nicht auf die spezifischen, in den Beispielen gezeigten Ausführungsformen beschränkt.

### AUSFÜHRUNGSBEISPIELE

Bei den folgenden Polymerisationsversuchen wurden die Komponenten wie beschrieben in einem Kunststoffbecher mit einem Kunststoffspatel von Hand vermischt und beobachtet, ob und wann die Mischung polymerisiert, wie stark die Hitzeentwicklung war, und welche Beschaffenheit (gelartig, gummiartig, glasartig = hart) das Endprodukt hatte.

### Beispiel 1

0,8 g Cu(II)octoat wurden mit 1,3 g Pentamethyldiethylentriamin (PMDETA) und 15,1 g 1,4-Butandioldimethacrylat (BDDMA) bei Raumtemperatur vermischt. Es wurde eine spontane Polymerisation unter Hitzeentwicklung beobachtet, wobei ein hartes Polymer erhalten wurde.

Dieses Beispiel zeigt, dass ein erfindungsgemäßes, von der ATRP abgewandeltes System, unter einfachen Bedingungen, d.h. ohne weitere Komponente, welche die Reaktion positiv beeinflussen und ohne Temperaturerhöhung, spontan polymerisiert und sich daher als Reaktionsharzzusammensetzung eignet.

### Beispiel 2

Eine erste Komponente (A-Komponente) wurde durch Vermischen von 0,5 g Cu(II)octoat und 7,5 g BDDMA erhalten. Eine zweite Komponente (B-Komponente) wurde durch Vermischen von 0,6 g PMDETA und 7,5 g BDDMA erhalten.

Die beiden Komponenten wurden vermischt, wobei nach etwa 2 Stunden eine Vergelung der Mischung beobachtet wurde.

Durch die Zugabe von Tempol zu einer analogen Masse wurde kein Vergelen beobachtet, was darauf schließen lässt, dass eine radikalische Polymerisation stattfinden würde, welche aber bei Gegenwart des Radikalfängers Tempol unterdrückt wird.

### Beispiel 3

Analog Beispiel 2 wurden eine A-Komponente und eine B-Komponente hergestellt, mit dem Unterschied, dass für die A-Komponente Cu(II)naphthenat anstelle des Cu(II)octoats verwendet wurde.

Nach etwa 4 Minuten wurde eine kräftige Polymerisation beobachtet, wobei ein hartes Polymer erhalten wurde.

Hieraus wird deutlich, dass ein Kupfer(II)salz, bei dem das oxidierende Kupfer(II)kation unter denselben Bedingungen ein größeres Redoxpotential aufweist, zu einer schnelleren Reaktion (Polymerisation) führt.

### Beispiel 4

Eine erste Komponente (A-Komponente) wurde durch Vermischen von 0,6 g Cu(II)naphthenat und 15 g BDDMA erhalten. Eine zweite Komponente (B-Komponente) wurde durch Vermischen von 1,2 g PMDETA und 15 g BDDMA erhalten.

Die beiden Komponenten wurden vermischt, wobei nach etwa 11 Minuten eine Vergelung der Mischung beobachtet wurde und die Temperatur der Mischung auf 60°C anstieg.

Beispiel 4 wurde wiederholt, indem analog eine A-Komponente und eine B-Komponente hergestellt wurden, wobei nun der B-Komponente ferner 0,12 g 1,8-Diazabicycloundec-7-en (DBU) zugegeben wurden. Hierbei wurde eine Gelierung bereits nach 9 Minuten beobachtet.

Dies zeigt deutlich, dass die Polymerisation durch die Zugabe einer starken, nicht-nucleophilen Base beschleunigt werden kann.

### Beispiel 5

Analog Beispiel 4 wurde eine A-Komponente und eine B-Komponente hergestellt, mit dem Unterschied, dass anstelle der 1,2 g PMDETA 1,1 g 2,2'-Bipyridin (bipy) verwendet wurden.

Nach Vermischen der beiden Komponenten konnte keine Polymerisation beobachtet werden.

Dies zeigt, dass das Amin durch das Kupfer(II)kation oxidiert werden muss, damit eine Polymerisation stattfinden kann. Bipy ist deutlich oxidationsbeständiger als z.B. PMDETA.

### Beispiel 6

Eine erste Komponente (A-Komponente) wurde durch Vermischen von 0,75 g Cu(II)octoat und 15 g BDDMA und eine zweite Komponenten (B-Komponente) wurde durch Vermischen von 1,7 g Hexamethyltriethylentetramin (HMTETA) und 15 g BDDMA hergestellt.

Die Mischung gelierte nach etwa 6 Minuten.

Die Beispiele zeigen deutlich, dass es möglich ist, eine Reaktionsharzmischung bereitzustellen, bei der die Polymerisation durch ein ATRP-analoges System gemäß der Erfindung bei Raumtemperatur ausgelöst werden kann. Die Polymerisation lässt sich zum einen durch die Zugabe eines stabilen *N*-Oxyl-Radikals bis zum Stillstand verlangsamen und durch die Zugabe einer starken, nicht-nucleophilen Base beschleunigen, so dass es möglich ist, über die Wahl der Additive die Reaktivität zu steuern und einzustellen.

## Patentansprüche

1. Reaktionsharz-Zusammensetzung mit einem Harzbestandteil, der eine radikalisch polymerisierbare Verbindung enthält, und einem Initiatorsystem, das ein Kupfer(II)salz mit einem oxidierenden Kupfer(II)kation und einen Stickstoff-enthaltenden Liganden umfasst, wobei das Kupfer(II)salz und der Stickstoff-enthaltende Ligand reaktionsinhibierend getrennt voneinander sind, **dadurch gekennzeichnet, dass** das oxidierende Kupfer(II)kation ein Redoxpotential aufweist, das größer als das des Stickstoff-enthaltenden Liganden ist, um aus dem Stickstoff-enthaltenden Liganden ein Radikal zu erzeugen.

2. Reaktionsharz-Zusammensetzung nach einem der vorhergehenden Ansprüche, wobei das Kupfer(II)salz in organischen Lösungsmitteln und/oder in der radikalisch polymerisierbaren Verbindung löslich ist.

3. Reaktionsharz-Zusammensetzung nach Anspruch 2 oder 2, wobei das Kupfer(II)salz aus der Gruppe ausgewählt ist, die aus Cu(II)(PF₆)₂, CuX₂, mit X = Cl, Br, I, Cu(OTf)₂ und Cu(II)-Carboxylaten besteht.

4. Reaktionsharz-Zusammensetzung nach einem der vorhergehenden Ansprüche, wobei der Stickstoff-enthaltende Ligand ein tertiäres aliphatisches Amin mit Wasserstoffatomen am zum Stickstoffatom stehenden α-Kohlenstoffatom ist.

5. Reaktionsharz-Zusammensetzung nach Anspruch, wobei der Stickstoff-enthaltende Ligand im Überschuss vorhanden ist.

6. Reaktionsharz-Zusammensetzung nach einem der vorhergehenden Ansprüche, wobei das Initiatorsystem ferner eine starke, nicht-nucleophile Base umfasst.

7. Reaktionsharz-Zusammensetzung nach einem der vorhergehenden Ansprüche, wobei die radikalisch polymerisierbare Verbindung ein ungesättigtes Polyesterharz, ein Vinylesterharz und/oder ein Vinylester-Urethanharz ist.

8. Reaktionsharz-Zusammensetzung nach einem der vorhergehenden Ansprüche, wobei die Zusammensetzung ferner einen nicht-phenolischen Inhibitor enthält.

9. Reaktionsharz-Zusammensetzung nach Anspruch 8, wobei der nicht-phenolische Inhibitor ein stabiles *N*-Oxyl-Radikal ist.

10. Reaktionsharz-Zusammensetzung nach einem der vorhergehenden Ansprüche, wobei der Harzbestandteil ferner mindestens einen Reaktivverdünner umfasst.

11. Reaktionsharz-Zusammensetzung nach einem der vorhergehenden Ansprüche, wobei die Zusammensetzung ferner anorganische Zuschlagstoffe enthält.

12. Reaktionsharz-Zusammensetzung nach Anspruch 11, wobei der anorganische Zuschlagstoff ein Additiv und/oder ein Füllstoff ist.

13. Zwei- oder Mehrkomponenten-System umfassend eine Reaktionsharz-Zusammensetzung nach einem der Ansprüche 1 bis 12.

14. Zweikomponenten-System nach Anspruch 13, wobei in einer ersten Komponente das Kupfer(II)salz und in einer zweiten Komponente der der Stickstoff-enthaltende Ligand enthalten sind, die radikalisch polymerisierbare Verbindung und gegebenenfalls der Inhibitor auf die beiden Komponenten verteilt sind und die beiden Komponenten reaktionsinhibierend getrennt voneinander sind.

15. Zweikomponenten-System nach Anspruch 14, wobei die Reaktionsharz-Zusammensetzung ferner mindestens einen Reaktivverdünner und/oder anorganischen Zuschlagstoffe, die in einer oder in beiden Komponenten enthalten sind, umfasst.
